# FASCICULE DE BREVET EUROPEEN

(11) **EP 3 953 162 B1**
(45) Date de publication et mention de la délivrance du brevet: **14.02.2024**
(21) Numéro de dépôt: 20717194.3
(22) Date de dépôt: 09.04.2020
(51) Int. Cl.: B29D 30/00, B60C 23/04, G06K 19/077

(54) **PROFILE MONOBLOC POUR ENROBAGE D'UN DISPOSITIF ÉLECTRONIQUE ET PROCÉDÉ D'ENROBAGE D'UN DISPOSITIF ÉLECTRONIQUE**
MONOBLOCKPROFIL ZUM EINBETTEN EINES ELEKTRONISCHEN MODULS UND VERFAHREN ZUM EINBETTEN EINES ELEKTRONISCHEN MODULS
MONOBLOC PROFILE FOR ENCAPSULATING AN ELECTRONIC MODULE AND METHOD FOR ENCAPSULATING AN ELECTRONIC MODULE

(30) Priorité: 11.04.2019 FR 1903887
(43) Date de publication de la demande: 16.02.2022
(73) Titulaire: COMPAGNIE GENERALE DES ETABLISSEMENTS MICHELIN, 63000 Clermont-Ferrand (FR)
(72) Inventeur: PORTIER, Guillaume, 63040 Clermond-Ferrand Cedex 9 (FR); EYROULET, Nicolas, 63040 Clermond-Ferrand Cedex 9 (FR); LALLEMENT, Claude, 63040 Clermond-Ferrand Cedex 9 (FR); FORICHON, Baptiste, 63040 Clermond-Ferrand Cedex 9 (FR)
(74) Mandataire: M.F.P. Michelin
(86) Numéro de dépôt international: PCT/EP2020/060130
(87) Numéro de publication internationale: WO 2020/208131

(56) Documents cités:
- EP-A1- 1 522 957
- EP-A1- 3 424 754
- EP-A2- 0 724 951
- WO-A1-2010/007283
- WO-A1-2018/104622
- DE-A1-102007 050 234
- GB-A- 2 392 889
- US-A1- 2007 251 620

## Description

### Domaine technique de l'invention

La présente invention est relative au domaine des articles semi-finis en matériau élastomérique pouvant enrober des dispositifs électroniques, ainsi qu'aux procédés d'enrobage de dispositifs électroniques dans de tels articles semi-finis.

### Art antérieur

Il est courant d'intégrer dans un pneumatique un dispositif électronique comprenant par exemple un transpondeur à identification par radiofréquence passif. Ce type de transpondeur est généralement désigné par le sigle anglais RFID. Un tel dispositif électronique peut stocker des données, par exemple relatives au pneumatique.

Pour améliorer la qualité de la transmission des données stockées dans le dispositif électronique, il est courant de l'enrober préalablement dans de la gomme. En effet, d'une manière générale, plus la constante diélectrique de la masse de gomme enrobant le dispositif électronique est élevée, plus le signal électrique reçu et émis par le dispositif électronique est atténué. Étant donné que les constantes diélectriques des gommes généralement utilisées pour la fabrication de pneumatiques sont élevées, la transmission des données est fortement améliorée dans le cas où la constante diélectrique de la gomme d'enrobage du dispositif électronique est faible.

En outre, l'enrobage préalable du dispositif permet de le protéger lors de son stockage avant de l'incorporer dans un pneumatique.

On connaît dans l'état de la technique divers procédés de fabrication d'un semi-fini comprenant un dispositif électronique enrobé de gomme (voir, par exemple, les documents EP1522957 A1, WO2018104622 A1 et GB2392889 A).

Par exemple, le document WO2010/007283 propose un procédé de fabrication d'au moins un semi-fini comprenant au moins un dispositif électronique enrobé de gomme, dans lequel on met le dispositif en contact avec une première bande de gomme, puis on le recouvre par une seconde bande de gomme de manière à enrober le dispositif, les deux bandes défilant sensiblement à une même vitesse depuis une première zone dans laquelle les deux bandes sont disjointes vers une seconde zone dans laquelle deux faces respectives des deux bandes sont en contact l'une avec l'autre.

Bien qu'efficace et performant, ce procédé nécessite d'aligner et de synchroniser correctement les bandes de gomme de manière à ce que le dispositif électronique soit correctement enrobé et les bandes correctement superposées.

Poursuivant ses recherches, la demanderesse a découvert qu'un profilé de forme particulière permettait de simplifier l'enrobage d'un dispositif électronique. Pour résoudre les problèmes, la présent demande propose une bande profilée monobloc pour l'enrobage de dispositifs électroniques selon la revendication 1, un procédé d'enrobage d'un dispositif électronique selon la revendication 7 et un module de communication radiofréquence selon la revendication 14.

### Description détaillée de l'invention

### Définitions

Par vertical on entend, comme communément admis, selon la direction de la pesanteur. Par horizontal, on entend perpendiculairement à la verticale.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

La mesure de plasticité Mooney se fait selon le principe suivant et conformément à la norme ASTM D-1646. La composition ou l'élastomère, généralement cru, est moulé dans une enceinte cylindrique chauffée à une température donnée, usuellement 100°C. Après une minute de préchauffage, un rotor de type L tourne au sein de l'éprouvette à 2 tours par minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

### Bande profilée monobloc

La bande profilée monobloc est préférentiellement obtenue par extrusion d'un matériau élastomérique. Par monobloc, on entend que la bande profilée est obtenue sans assemblage d'éléments, en particulier sans assemblage après extrusion.

Par bande, on entend de manière bien connue une forme dont l'une des dimensions, la longueur, est supérieure aux autres dimensions, par exemple au moins supérieure d'un facteur 2.

On définit pour cette bande profilée une direction longitudinale comme étant la direction parallèle à la longueur de la bande, préférentiellement parallèle au sens de l'extrusion de la bande profilée monobloc. Par plan transverse, on entend le plan perpendiculaire à la direction longitudinale. On définit le repère orthonormé XYZ dans lequel X correspond à la direction longitudinale, Z à la direction verticale orientée vers le haut et Y est défini comme la direction transverse. Le plan horizontal est défini comme le plan XY.

La bande profilée monobloc selon l'invention comprend deux bords s'étendant longitudinalement et sensiblement parallèles entre eux. On définit pour cette bande une largeur, mesurée sur la projection de ladite bande sur un plan horizontal selon la direction transverse. De manière préférée, la bande profilée monobloc présente une largeur au plus égale à 40 mm, de préférence supérieure à 3 mm, et de manière préférée comprise entre 10 et 25 mm.

L'embase de la bande profilée monobloc selon l'invention comprend une zone d'accueil du dispositif électronique. Par zone d'accueil, on entend une zone adaptée pour recevoir le dispositif électronique. La zone d'accueil peut comprendre une rainure s'étendant longitudinalement, de dimensions adaptées pour recevoir le dispositif électronique. Une telle rainure permet de positionner avec précision le dispositif électronique sur la zone d'accueil et de le maintenir en place jusqu'à ce que le rabat soit déformé de manière à enrober ledit dispositif dans la bande profilée monobloc.

La bande profilée monobloc selon l'invention comprend au moins un rabat faisant saillie avec ladite embase et pouvant être déformé plastiquement par application d'une force d'application selon une direction prédéterminée de manière à enrober le dispositif électronique entre ladite embase et ledit au moins un rabat.

Conformément à l'invention, l'application d'une force d'application selon une direction prédéterminée permet de déformer plastiquement le rabat de manière à ce qu'il recouvre au moins partiellement le dispositif électronique.

Par « direction prédéterminée », on entend que la direction d'application de la force d'application est déterminée selon la forme du rabat et la direction longitudinale de la bande transporteuse de manière à permettre la déformation plastique du rabat afin qu'il vienne enrober au moins partiellement le dispositif électronique.

Cette direction est substantiellement constante dans le temps. Par constante, on entend que la projection de la direction d'application de la force d'application sur un plan transverse à la direction longitudinale de la bande transporteuse, ce plan transverse comprenant un point d'application de la force d'application, forme avec une droite contenue dans ce plan transverse un angle dont la valeur varie dans le temps de plus ou moins 45°, préférentiellement de plus ou moins 35°, de manière préférée de plus ou moins 25°, très préférentiellement de plus ou moins 15°, de manière très préférée de plus ou moins 10°, encore plus préférentiellement de plus ou moins 5° et de manière très préférée d'une valeur inférieure ou égale à l'erreur de mesure d'angle. Cette droite contenue dans le plan transverse est choisie de manière arbitraire et est utilisée comme référence pour la mesure de l'angle formé entre cette droite et la projection de la direction d'application de la force d'application sur un plan transverse à la direction longitudinale de la bande transporteuse.

Dans la suite de l'exposé, l'expression « le rabat » désigne le rabat de la bande profilée selon l'invention si celle-ci ne comprend qu'un rabat, ou l'ensemble des rabats de la bande profilée selon l'invention si celle-ci comprend plusieurs rabats. Dans ce dernier cas, l'expression « le rabat » doit donc implicitement se comprendre dans la présente comme « les rabats ».

Ainsi, lorsque le rabat est déformé par application d'une force d'application selon une direction prédéterminée, le dispositif électronique placé sur la zone d'accueil est enrobé totalement, c'est-à-dire totalement recouvert par le rabat. En d'autres termes, le dispositif électronique est noyé dans la masse de gomme formée par l'embase et le rabat déformé plastiquement. Des moyens d'application de la force d'application seront ultérieurement décrits.

De manière préférée, le rabat s'étend parallèlement à la direction longitudinale de la bande profilée.

Dans un arrangement préféré, la bande profilée monobloc selon l'invention comprend deux rabats s'étendant parallèlement à la direction longitudinale de la bande profilée, chaque rabat pouvant être déformé plastiquement par application d'une force d'application selon une direction prédéterminée, de manière à enrober au moins partiellement un dispositif électronique entre ladite embase et ledit rabat, les deux rabats coopérant pour enrober un dispositif électronique entre ladite embase et lesdits rabats.

De manière préférée, dans cet arrangement, la zone d'accueil est limitée transversalement par la jonction entre les rabats et l'embase de la bande profilée, c'est-à-dire que les rabats sont disposés de part et d'autre de la zone d'accueil selon la direction transversale. Ainsi, la présence des rabats permet de positionner avec précision le dispositif électronique selon la direction transversale.

### Matériau élastomérique

La bande profilée monobloc selon l'invention est constituée d'un matériau élastomérique présentant une plasticité Mooney à cru comprise entre 30 et 90 unités Mooney (UM), préférentiellement comprise entre 50 et 70 UM. Ce matériau élastomérique est de préférence un isolant électrique, avec de manière préférée une constante diélectrique mesurée à 915 MHz inférieure à 6,5.

Le matériau élastomérique contient 100 pce (parties pour 100 parties d'élastomère en masse) d'un élastomère tel qu'un EPDM (ethylene propylene diene monomer rubber), un caoutchouc butyle, un néoprène ou un élastomère diénique tel que le SBR (styrene-butadiene rubber), le polybutadiène, le caoutchouc naturel, ou le polyisoprène.

Le matériau élastomérique comprend des charges de type silice, noir de carbone, craie, kaolin :
- avec une charge de type silice à un taux maximum de 50 pce,
- avec une charge de type noir de carbone de grade ASTM supérieur à 700, à un taux inférieur à 50 pce ;
- avec une charge de type noir de carbone de grade ASTM inférieur ou égal à 500, à un taux maximum de 20 pce.
- il est possible d'ajouter ou de remplacer ces charges par de la craie ou du kaolin.

Lorsque le matériau élastomérique comprend des charges de type silice, il peut également comprendre des agents de couplages de la silice avec les élastomères. De tels agents de couplages sont bien connus de l'Homme du métier. De tels taux et types de charges permettent de garantir une permittivité relative, ou constante diélectrique, inférieure à 6,5, notamment à une fréquence de 915 MHz.

La rigidité à cuit du matériau élastomérique est de préférence inférieure ou proche de celles des mélanges adjacents lorsque l'ensemble constitué par une portion de bande profilée monobloc et d'un dispositif électronique est intégré à un article de caoutchouc.

Le matériau élastomérique isolant électriquement comporte de manière préférée un promoteur d'adhésion pour le lier au dispositif électronique. Ce promoteur peut être un sel de cobalt ou de nickel, par exemple du naphtenate de cobalt à un taux inférieur à 3 pce et avec un taux de soufre adapté, de l'ordre de 5 à 7 pce.

### Dispositif électronique

La bande profilée monobloc selon l'invention peut être utilisée pour l'enrobage de tout type de dispositif électronique. En particulier, le dispositif électronique est de manière préférée un transpondeur à identification par radiofréquence passif, souvent identifié par l'acronyme anglais RFID (Radio-Frequency IDentification) et désigné par la suite sous le terme « transpondeur radiofréquence ».

On entend ici par le terme « transpondeur radiofréquence » que l'interrogation du transpondeur radiofréquence se fait extérieurement à celui-ci et de façon passive. Les phases d'interrogation ne nécessitent alors aucune énergie propre au transpondeur radiofréquence. La fonctionnalité du transpondeur radiofréquence est principalement un rôle d'identification de l'article en caoutchouc auquel il est intégré, par exemple une enveloppe pneumatique.

Les transpondeurs radiofréquences comprennent usuellement une puce électronique et une antenne rayonnante apte à communiquer avec un lecteur radiofréquence.

En particulier la fréquence de communication du transpondeur radiofréquence est située dans la bande des UHF (acronyme de Ultra Hautes Fréquences) comprise entre 300 MHz et 3 GHz permettant d'avoir un compromis avantageux entre une petite taille de l'antenne rayonnante, facilement intégrable dans un profilé monobloc destiné à une enveloppe pneumatique, et une grande distance de lecture du transpondeur radiofréquence, loin de l'enveloppe pneumatique. De façon avantageuse, le transpondeur radiofréquence communique dans la bande étroite de fréquences comprises entre 860 MHz et 960 Mhz et tout spécifiquement sur des bandes très étroites de 860 MHz à 870 MHz et 915 MHz à 925 MHz. En effet, à ces fréquences, les mélanges élastomères classiques de l'enveloppe pneumatique constituent un bon compromis à la propagation des ondes radioélectriques. De plus, ces fréquences sont les plus élevées possibles pour minimiser la taille de l'antenne rayonnante afin de faciliter l'intégration du transpondeur radiofréquence noyé dans un patch caoutchouteux dans l'enveloppe pneumatique.

Selon un premier mode de réalisation, l'antenne rayonnante comporte deux tronçons d'antennes hélicoïdales et la puce électronique est connectée galvaniquement aux deux tronçons d'antennes hélicoïdales.

Selon un autre mode de réalisation, le transpondeur radiofréquence comprend en plus une antenne primaire connectée électriquement à la puce électronique, dans lequel l'antenne primaire est couplée inductivement à l'antenne rayonnante, et dans lequel l'antenne rayonnante est une antenne dipôle constituée d'un ressort hélicoïdal monobrin.

Ce deuxième mode de réalisation a l'avantage de dissocier mécaniquement l'antenne rayonnante des composants électroniques du transpondeur et ainsi de supprimer le point faible des transpondeurs usuels à savoir la zone de fixation des tronçons d'antenne sur le support de la puce électronique.

### Procédé d'enrobage d'un dispositif électronique

L'invention a également pour objet un procédé d'enrobage d'un dispositif électronique comprenant au moins les étapes suivantes:
a. Positionner une bande profilée selon l'invention sur un plan ;
b. Positionner un dispositif électronique sur la zone d'accueil ;
c. Déformer plastiquement le ou les rabats par application d'une force d'application comprise entre 20 et 500 N, préférentiellement comprise entre 50 et 100 N, de manière à enrober totalement le dispositif électronique.

L'étape a) du procédé selon l'invention consiste à positionner une bande profilée selon l'invention sur un plan. La bande profilée peut être positionnée sur un plan directement à la sortie d'une extrudeuse ou bien à partir d'un moyen de stockage, par exemple une bobine ou tout autre moyen approprié. Ainsi, de manière préférée, le procédé d'enrobage selon l'invention comprend préalablement à l'étape a) une étape d'extrusion d'un matériau élastomérique de manière à obtenir la bande profilée selon l'invention. Le rabat peut être obtenu directement à l'issue de l'extrusion par une forme de filière adaptée, ou bien être généré par incision de la bande profilée monobloc obtenue par extrusion. L'incision peut par exemple être réalisée à l'aide de moyens de coupe disposés après la filière dans le sens de l'extrusion.

La bande profilée selon l'invention est positionné sur le plan de manière à ce que la zone d'accueil soit accessible pour pouvoir positionner le dispositif électronique lors de l'étape b).

Le plan peut être tout support sur lequel la bande profilée peut être positionnée de manière stable. De manière préférée, le plan est une bande transporteuse défilante, la bande profilée étant disposée de manière à ce que sa direction longitudinale coïncide avec la direction d'avancement de la bande transporteuse.

Le procédé selon l'invention comprend une étape b) dans laquelle le dispositif électronique est positionné sur la zone d'accueil.

Le dispositif est positionné sur la zone d'accueil par des moyens de pose qui peuvent être tous moyens de pose adaptés au dispositif électronique. De tels moyens peuvent être par exemple un bras manipulateur comprenant des moyens magnétiques ou mécaniques activables ou désactivables permettant de saisir et de transporter un dispositif électronique d'une zone de stockage vers la zone d'accueil de la bande profilée puis de se dessaisir du dispositif une fois celui-ci positionné sur la zone d'accueil.

De manière préférée, dans l'étape b), on positionne, à intervalles longitudinaux réguliers, un dispositif électronique sur la zone d'accueil sans qu'il y ait chevauchement transversal entre deux dispositifs électroniques consécutifs.

Le procédé selon l'invention comprend ensuite une étape c) au cours de laquelle on déforme plastiquement le ou les rabats par application d'une force d'application comprise entre 20 et 500 N, préférentiellement entre 50 et 100 N, de manière à enrober totalement le dispositif électronique.

Conformément à l'invention, l'application d'une force d'application selon une direction prédéterminée permet de déformer plastiquement le rabat de manière à ce qu'il recouvre au moins partiellement le dispositif électronique.

La force d'application est appliquée sur le, ou chaque, rabat par des moyens d'application tels que, par exemple, une roue cylindrique montée mobile en rotation dont la largeur, en d'autres termes la hauteur du cylindre ou largeur de tranche, est adaptée à la taille du rabat. Des profils de roues non cylindriques adaptés au profilé peuvent également être utilisés.

Dans le cas particulier où la bande profilée selon l'invention est positionnée sur une bande transporteuse défilante, les moyens d'application de la force d'application peuvent être constitués d'au moins une roue cylindrique montée mobile en rotation, l'axe de rotation de la roue étant sensiblement perpendiculaire à la direction de défilement de la bande transporteuse, et positionnée à proximité de la bande transporteuse de telle sorte que, lors du défilement, le rabat vienne au contact de la tranche de la roue. Par application d'une force d'application selon une direction prédéterminée, le rabat est déformé plastiquement au cours du défilement de manière à enrober au moins partiellement le dispositif électronique. Le nombre de roues et leur position sont ajustés en fonction du nombre de rabats et de leur position.

De manière préférée, la bande profilée est à une température comprise entre 30 et 90°C, préférentiellement entre 40 et 80°C lors de l'étape c). Cette température permet une déformation plastique optimale du, ou des rabats. La bande profilée peut être chauffée juste avant l'étape c), ou préalablement à l'une quelconque des étapes du procédé selon l'invention. La température de la bande peut être mesurée autour du point d'application de la force d'application, préférentiellement à une distance comprise entre 0 et 100 mm du point d'application de la force d'application.

De manière préférée, le procédé selon l'invention comporte, à l'issue de l'étape c), une étape de découpe de la bande profilée selon un plan transverse ne comprenant pas de dispositif électronique.

Dans un arrangement préféré, la bande profilée est alimentée de manière continue. L'étape de découpe est réalisée afin de séparer la bande en modules comprenant chacun un dispositif électronique. L'écart entre deux plans de coupes consécutifs, en d'autres termes la longueur d'un module, est préférentiellement inférieur ou égal à 100 mm et de manière préférée compris entre 50 et 70 mm. L'espacement entre deux dispositifs consécutifs positionnés lors de l'étape b) est ajusté de manière à ce que d'une part il n'existe aucun chevauchement entre deux dispositifs positionnés consécutivement et d'autre part qu'à l'issue de la découpe le dispositif soit totalement enrobé dans le module découpé, c'est-à-dire qu'aucune partie dudit dispositif n'émerge dudit module. Des moyens de contrôle peuvent être utilisés afin de vérifier que l'étape de découpe n'a rendue apparente ou émergeante aucune partie du dispositif électronique.

### Module de communication radiofréquence

L'invention a également pour objet un module de communication obtenu par un procédé selon l'invention.

Le module de communication selon l'invention, par ses propriétés, peut être intégré à tout type d'article de caoutchouc, tels que par exemples ballons, bandes transporteuses, articles gonflables. En particulier, le module de communication selon l'invention est particulièrement adapté pour être intégré dans la structure d'un pneumatique.

### Pneumatique

L'invention a également pour objet un pneumatique comportant un sommet, deux bourrelets et deux flancs, une nappe carcasse ancrée dans lesdits deux bourrelets, comprenant un module de communication radiofréquence selon l'invention.

Selon un mode de réalisation préférentiel, l'axe de l'antenne rayonnante du module de communication radiofréquence est orienté normalement aux renforts de la nappe carcasse.

Selon un mode de réalisation, le module de communication radiofréquence peut être fixé sur un flanc du pneumatique. On évite alors de le placer à proximité immédiate du cordon de centrage ou milieu du flanc du pneumatique, mais plutôt au-dessus ou en-dessous de ce cordon de centrage.

Selon un autre mode de réalisation, le module de communication radiofréquence peut être fixé à la surface de la couche intérieure du pneumatique.

Selon encore un autre mode de réalisation, le module de communication radiofréquence est intégré dans le pneumatique lors de la confection de ce dernier.

La mise en place d'un tel module de communication radiofréquence peut intervenir à tout moment de la vie du pneumatique de sa fabrication à son rechapage.

Le pneumatique équipé d'un module de communication radiofréquence peut être un pneumatique destiné à équiper des véhicules à moteur de type tourisme, SUV ("Sport Utility Vehicles"), deux roues (notamment motos), avions, comme des véhicules industriels choisis parmi camionnettes, « Poids-lourd », c'est-à-dire métro, bus, engins de transport routier (camions, tracteurs, remorques), véhicules hors-la-route tels qu'engins agricoles ou de génie civil, et autres véhicules de transport ou de manutention.

### Description des figures

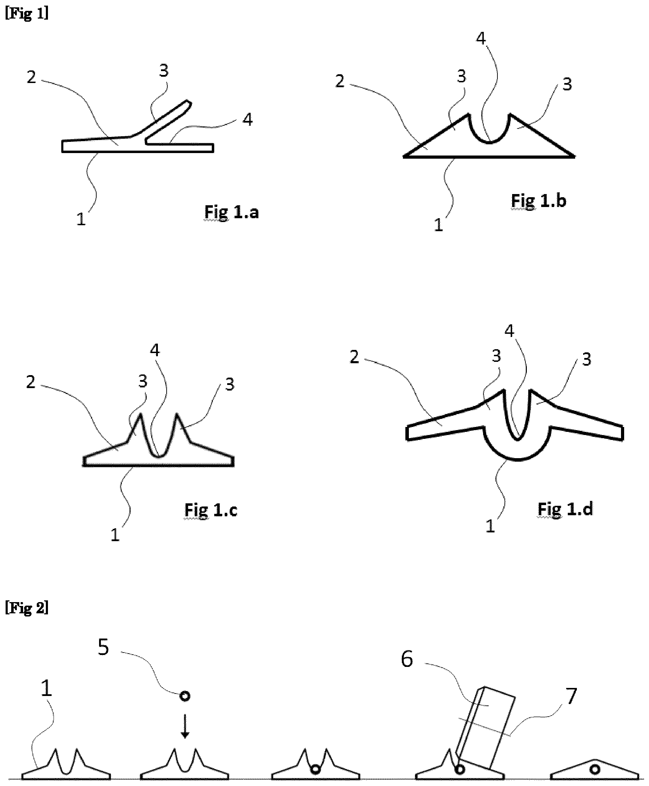

[Fig 1] La figure 1, comprenant les sous-figures La à 1.d, représente de manière schématique et non limitative quatre sections transversales de bandes profilées monoblocs selon l'invention. Les éléments sont numérotés de manière identique sur chaque sous-figure.

Une bande profilée monobloc (1) comprend une embase (2) comprenant une zone d'accueil (4) du dispositif électronique et un rabat (3). La bande profilée monobloc (1) de la figure 1.a comprend un seul rabat (3) tandis que les bandes profilées monoblocs (1) représentées schématiquement dans les figures 1.b à 1.d comprennent chacune deux rabats (3).

[Fig 2] La figure 2 représente de manière schématique un procédé d'enrobage d'un dispositif électronique selon l'invention. Une bande profilée monobloc (1) est positionnée sur un plan. On positionne un dispositif électronique (5) dans la zone d'accueil. Une force d'application est appliquée sur le rabat via une poulie (6) montée mobile en rotation autour de son axe de rotation (7) de manière à déformer le rabat et enrober partiellement le dispositif électronique. Une force d'application est ensuite appliquée sur le second rabat de manière similaire (non représentée), les deux rabats coopérant de manière à enrober totalement le dispositif électronique.

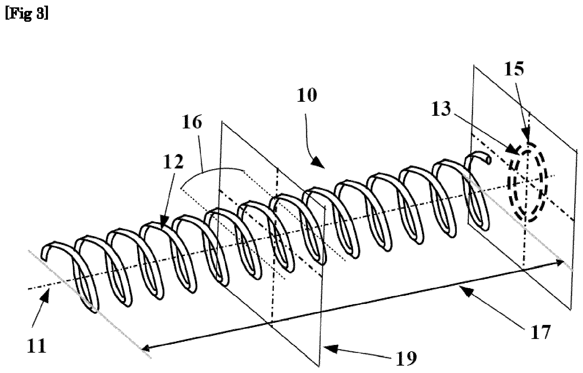

[Fig 3] La figure 3 présente une antenne rayonnante 10 constituée d'un fil en acier 12 qui a été déformé plastiquement afin de former un ressort hélicoïdal présentant un axe de révolution 11. Ce fil d'acier est revêtu d'une couche de conduction en cuivre, aluminium, argent, or, cuivre, étain, zinc ou laiton recouverte si nécessaire d'une couche d'isolation chimique par exemple en laiton, zinc, nickel ou étain pour protéger le matériau élastomérique du matériau de la couche de conduction.

La conduction électromagnétique d'une telle antenne s'effectue principalement par un effet de peau, c'est-à-dire qu'elle est principalement assurée dans les couches extérieures de l'antenne. Cette épaisseur de peau est notamment fonction de la fréquence de rayonnement et du matériau constitutif de la couche de conduction. À titre d'exemple, pour une fréquence UHF (par exemple 915 MHz), l'épaisseur de peau est de l'ordre de 2,1 µm pour l'argent, 2,2 µm pour le cuivre, 4,4 µm pour le laiton.

Le fil d'acier peut être revêtu de ces couches puis mis en forme ; alternativement il peut aussi être mis en forme puis revêtu.

Le ressort hélicoïdal est défini tout d'abord par un diamètre d'enroulement du fil revêtu et un pas d'hélice. Ainsi, on détermine précisément des diamètres intérieur 13 et extérieur 15 du ressort hélicoïdal en prenant en compte le diamètre du fil. La longueur du ressort 17 correspond ici à la demi-longueur d'onde du signal de transmission du transpondeur radiofréquence 1 dans une masse caoutchouteuse. Ainsi on peut définir un plan médian 19 au ressort hélicoïdal perpendiculaire à l'axe de révolution 11 séparant l'antenne rayonnante en deux parties égales. Ce plan est au milieu de la zone centrale 16 de l'antenne rayonnante, cette zone centrale 16 correspond environ à 25 % de la longueur totale de l'antenne et de préférence 15 %.

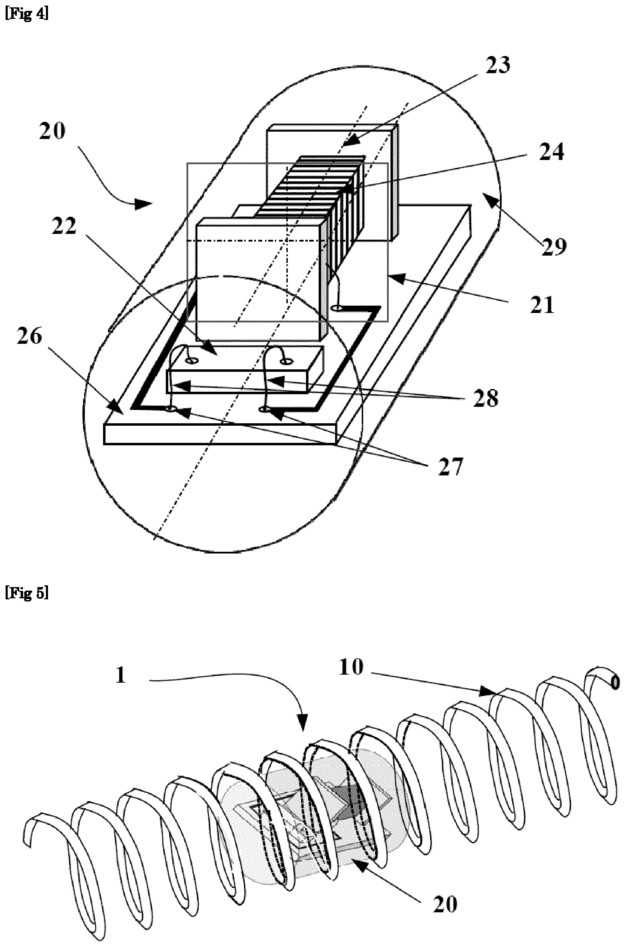

[Fig 4] La figure 4 présente la partie électronique 20 d'un transpondeur radiofréquence 1 destiné à une configuration où la partie électronique 20 est située à l'intérieur de l'antenne rayonnante 10. La partie électronique 20 comprend une puce électronique 22 et une antenne primaire 24 connectée électriquement à la puce électronique 22 par l'intermédiaire d'un circuit imprimé 26. L'antenne primaire est ici constituée par une micro bobine CMS (acronyme de Composant Monté en Surface) présentant un axe de symétrie 23. On détermine le plan médian 21 de l'antenne primaire défini par une normale parallèle à l'axe de symétrie 23 de la bobine CMS et séparant la bobine en deux parties égales. La connexion électrique entre les composants sur le circuit imprimé est réalisée à l'aide de pistes en cuivre terminé par des pastilles 27 en cuivre. La connexion électrique des composants sur le circuit imprimé est réalisée à l'aide de la technique dite du « wire bonding » par des fils 28 en or entre le composant et les pastilles 27. L'ensemble constitué du circuit imprimé 26, de la puce électronique 22 de l'antenne primaire 24 est noyé dans une masse rigide 29 en résine époxy haute température isolante électriquement constituant la partie électronique 20 du transpondeur radiofréquence 1.

[Fig 5] La figure 5 présente un transpondeur radiofréquence 1 dans une configuration où la partie électronique 20 est située à l'intérieur de l'antenne rayonnante 10. La forme géométrique de la partie électronique 10 est circonscrite dans un cylindre dont le diamètre est inférieur ou égal au diamètre intérieur 13 du ressort hélicoïdal. L'enfilement de la partie électronique 20 dans l'antenne rayonnante 10 s'en trouve facilité. Le plan médian 21 de l'antenne primaire se trouve dans la zone centrale de l'antenne rayonnante et sensiblement superposé au plan médian 19 de l'antenne rayonnante 10.

## Revendications

1. Bande profilée monobloc (1) pour l'enrobage de dispositifs électroniques (5) comprenant :
a. une embase (2) comprenant une zone d'accueil (4) du dispositif électronique (5),
b. au moins un rabat (3) faisant saillie avec ladite embase (2) et pouvant être déformé plastiquement par application d'une force d'application selon une direction prédéterminée de manière à enrober un dispositif électronique (5) entre ladite embase (2) et ledit au moins un rabat (3),
ladite bande (1) étant constituée d'un matériau élastomérique présentant une plasticité Mooney à cru comprise entre 30 et 90 Unités Mooney (UM).

2. Bande profilée (1) selon la revendication précédente dans laquelle le rabat (3) s'étend parallèlement à la direction longitudinale de la bande (1).

3. Bande profilée (1) selon l'une quelconque des revendications précédentes comprenant deux rabats (3) s'étendant parallèlement à la direction longitudinale de la bande profilée (1), chaque rabat (3) pouvant être déformé plastiquement par application d'une force d'application selon une direction prédéterminée, de manière à enrober au moins partiellement un dispositif électronique (5) entre ladite embase (2) et ledit rabat (3), les deux rabats (3) coopérant pour enrober totalement un dispositif électronique (5) entre ladite embase (2) et lesdits rabats (3).

4. Bande profilée (1) selon la revendication précédente dans laquelle la zone d'accueil (4) est limitée transversalement par la jonction entre les rabats (3) et l'embase (2).

5. Bande profilée (1) selon l'une quelconque des revendications précédentes dont la largeur est au plus égale à 40 mm, de préférence supérieure à 3 mm, et de manière préférée comprise entre 10 et 25 mm.

6. Bande profilée (1) selon l'une quelconque des revendications précédentes dans laquelle le matériau élastomérique est un isolant électrique, de préférence avec une constante diélectrique mesurée à 915 MHz inférieure à 6,5.

7. Procédé d'enrobage d'un dispositif électronique (5) comprenant au moins les étapes suivantes :
a. Positionner une bande profilée (1) selon l'une quelconque des revendications 1 à 6 sur un plan ;
b. Positionner un dispositif électronique (5) sur la zone d'accueil (4) ;
c. Déformer plastiquement le ou les rabats (3) par application d'une force d'application comprise entre 20 et 500 N de manière à enrober totalement le dispositif électronique (5).

8. Procédé d'enrobage selon la revendication précédente dans lequel le plan de l'étape a) est une bande transporteuse défilante.

9. Procédé d'enrobage selon l'une quelconque des revendications 7 à 8 dans lequel, dans l'étape b), on positionne, à intervalles longitudinaux réguliers, un dispositif électronique (5) sur la zone d'accueil (4) sans qu'il y ait chevauchement transversal entre deux dispositifs électroniques (5) consécutifs.

10. Procédé d'enrobage selon l'une quelconque des revendications 7 à 9 comprenant à l'issue de l'étape c) une étape de découpe de la bande profilée (1) selon un plan transverse ne comprenant pas de dispositif électronique (5).

11. Procédé d'enrobage selon l'une quelconque des revendications 7 à 10 comprenant préalablement à l'étape a) une étape d'extrusion d'un matériau élastomérique de manière à obtenir la bande profilée (1) selon l'une quelconque des revendications 1 à 6.

12. Procédé d'enrobage selon l'une quelconque des revendications 7 à 11 dans lequel le dispositif électronique (5) est un transpondeur radiofréquence.

13. Procédé d'enrobage selon la revendication précédente dans lequel la fréquence de communication du transpondeur radiofréquence est située dans la bande des UHF comprise entre 300 MHz et 3 GHz, préférentiellement dans la bande étroite de fréquences comprise entre 860 MHz et 960 Mhz, et très préférentiellement sur des bandes très étroites de 860 MHz à 870 MHz et 915 MHz à 925 MHz.

14. Module de communication radiofréquence obtenu par le procédé selon l'une des revendications 12 à 13.

15. Pneumatique comprenant un module de communication radiofréquence selon la revendication 14.

## Patentansprüche

1. Monoblock-Profilband (1) zum Umhüllen elektronischer Vorrichtungen (5), umfassend:
a. einen Basisteil (2), der einen Aufnahmebereich (4) für die elektronische Vorrichtung (5) umfasst,
b. mindestens einen Umschlagteil (3), der vom Basisteil (2) vorsteht und durch Ausübung einer Anpresskraft in einer vorbestimmten Richtung plastisch verformt werden kann, um so eine elektronische Vorrichtung (5) zwischen dem Basisteil (2) und dem mindestens einen Umschlagteil (3) zu umhüllen,
wobei das Band (1) aus einem elastomeren Material besteht, das eine Mooney-Plastizität im Rohzustand zwischen 30 und 90 Mooney-Einheiten (ME) aufweist.

2. Profilband (1) nach dem vorhergehenden Anspruch, wobei sich der Umschlagteil (3) parallel zur Längsrichtung des Bandes (1) erstreckt.

3. Profilband (1) nach einem der vorhergehenden Ansprüche, welches zwei Umschlagteile (3) umfasst, die sich parallel zur Längsrichtung des Profilbandes (1) erstrecken, wobei jeder Umschlagteil (3) durch Ausübung einer Anpresskraft in einer vorbestimmten Richtung plastisch verformt werden kann, um so eine elektronische Vorrichtung (5) wenigstens teilweise zwischen dem Basisteil (2) und dem Umschlagteil (3) zu umhüllen, wobei die zwei Umschlagteile (3) zusammenwirken, um eine elektronische Vorrichtung (5) vollständig zwischen dem Basisteil (2) und den Umschlagteilen (3) zu umhüllen.

4. Profilband (1) nach dem vorhergehenden Anspruch, wobei der Aufnahmebereich (4) in Querrichtung durch die Verbindung zwischen den Umschlagteilen (3) und dem Basisteil (2) begrenzt ist.

5. Profilband (1) nach einem der vorhergehenden Ansprüche, dessen Breite höchstens 40 mm beträgt, vorzugsweise größer als 3 mm ist und bevorzugt zwischen 10 und 25 mm liegt.

6. Profilband (1) nach einem der vorhergehenden Ansprüche, wobei das elastomere Material ein elektrischer Isolator ist, vorzugsweise mit einer bei 915 MHz gemessenen Dielektrizitätskonstante, die kleiner als 6,5 ist.

7. Verfahren zum Umhüllen einer elektronischen Vorrichtung (5), welches mindestens die folgenden Schritte umfasst:
a. Positionieren eines Profilbandes (1) nach einem der Ansprüche 1 bis 6 auf einer Ebene;
b. Positionieren einer elektronischen Vorrichtung (5) auf dem Aufnahmebereich (4);
c. plastisches Verformen des Umschlagteils oder der Umschlagteile (3) durch Ausübung einer Anpresskraft zwischen 20 und 500 N, um so die elektronische Vorrichtung (5) vollständig zu umhüllen.

8. Verfahren zum Umhüllen nach dem vorhergehenden Anspruch, wobei die Ebene von Schritt a) ein laufendes Förderband ist.

9. Verfahren zum Umhüllen nach einem der Ansprüche 7 bis 8, wobei in Schritt b) in regelmäßigen Längsintervallen eine elektronische Vorrichtung (5) auf dem Aufnahmebereich (4) positioniert wird, ohne dass eine Querüberlappung zwischen zwei aufeinander folgenden elektronischen Vorrichtungen (5) erfolgt.

10. Verfahren zum Umhüllen nach einem der Ansprüche 7 bis 9, welches am Ende von Schritt c) einen Schritt des Zerschneidens des Profilbandes (1) entlang einer Querebene umfasst, die keine elektronische Vorrichtung (5) umfasst.

11. Verfahren zum Umhüllen nach einem der Ansprüche 7 bis 10, welches vor Schritt a) einen Schritt des Extrudierens eines elastomeren Materials umfasst, um das Profilband (1) nach einem der Ansprüche 1 bis 6 zu erhalten.

12. Verfahren zum Umhüllen nach einem der Ansprüche 7 bis 11, wobei die elektronische Vorrichtung (5) ein Hochfrequenz-Transponder ist.

13. Verfahren zum Umhüllen nach dem vorhergehenden Anspruch, wobei die Kommunikationsfrequenz des Hochfrequenz-Transponders im UHF-Band zwischen 300 MHz und 3 GHz liegt, vorzugsweise in dem schmalen Frequenzband zwischen 860 MHz und 960 MHz und besonders bevorzugt in sehr schmalen Frequenzbändern von 860 MHz bis 870 MHz und von 915 MHz bis 925 MHz.

14. Hochfrequenz-Kommunikationsmodul, welches durch das Verfahren nach einem der Ansprüche 12 bis 13 erhalten wird.

15. Reifen, welcher ein Hochfrequenz-Kommunikationsmodul nach Anspruch 14 umfasst.

## Claims

1. One-piece profiled strip (1) for encapsulating electronic devices (5), comprising:
a. a base (2) comprising a receiving zone (4) for the electronic device (5),
b. at least one flap (3) that protrudes with respect to said base (2) and that can be plastically deformed by application of an application force in a predetermined direction so as to encapsulate an electronic device (5) between said base (2) and said at least one flap (3),
said strip (1) being made of an elastomeric material that exhibits a Mooney plasticity in the raw state of between 30 and 90 Mooney Units (MU).

2. Profiled strip (1) according to the preceding claim, wherein the flap (3) extends parallel to the longitudinal direction of the strip (1).

3. Profiled strip (1) according to either one of the preceding claims, comprising two flaps (3) extending parallel to the longitudinal direction of the profiled strip (1), each flap (3) being able to be plastically deformed by application of an application force in a predetermined direction, so as to at least partially encapsulate an electronic device (5) between said base (2) and said flap (3), the two flaps (3) interacting so as to totally encapsulate an electronic device (5) between said base (2) and said flaps (3).

4. Profiled strip (1) according to the preceding claim, wherein the receiving zone (4) is limited transversely by the junction between the flaps (3) and the base (2).

5. Profiled strip (1) according to any one of the preceding claims, of which the width is at most equal to 40 mm, preferably greater than 3 mm, and in a preferred manner between 10 and 25 mm.

6. Profiled strip (1) according to any one of the preceding claims, wherein the elastomeric material is an electrical insulator, preferably with a dielectric constant measured at 915 MHz of less than 6.5.

7. Method for encapsulating an electronic device (5), comprising at least the following steps:
a. Positioning a profiled strip (1) according to any one of Claims 1 to 6 on a plane;
b. Positioning an electronic device (5) on the receiving zone (4);
c. Plastically deforming the one or more flaps (3) by application of an application force of between 20 and 500 N so as to totally encapsulate the electronic device (5).

8. Encapsulating method according to the preceding claim, wherein the plane in step a) is a running conveyor belt.

9. Encapsulating method according to either one of Claims 7 and 8, wherein, in step b), an electronic device (5) is positioned, at regular longitudinal intervals, on the receiving zone (4) without there being any transverse overlap between two consecutive electronic devices (5).

10. Encapsulating method according to any one of Claims 7 to 9, comprising, at the end of step c), a step of cutting the profiled strip (1) in a transverse plane that does not comprise an electronic device (5).

11. Encapsulating method according to any one of Claims 7 to 10, comprising, before step a), a step of extruding an elastomeric material so as to obtain the profiled strip (1) according to any one of Claims 1 to 6.

12. Encapsulating method according to any one of Claims 7 to 11, wherein the electronic device (5) is a radiofrequency transponder.

13. Encapsulating method according to the preceding claim, wherein the communication frequency of the radiofrequency transponder is situated in the UHF band between 300 MHz and 3 GHz, preferably in the narrow frequency band between 860 MHz and 960 MHz, and very preferably in very narrow bands of 860 MHz to 870 MHz and 915 MHz to 925 MHz.

14. Radiofrequency communication module obtained by the method according to either one of Claims 12 and 13.

15. Tyre comprising a radiofrequency communication module according to Claim 14.
